# EUROPEAN PATENT APPLICATION

(11) **EP 4 546 275 A1**
(43) Date of publication of application: **30.04.2025**
(21) Application number: 23859830.4
(22) Date of filing: 03.07.2023
(51) Int. Cl.: G06T 19/00, G06F 3/01

(54) **PROVIDING DEVICE AND PROVIDING METHOD**

(30) Priority: 31.08.2022 JP 2022138179
(71) Applicant: JVCKenwood Corporation, Yokohama-shi, Kanagawa 2210022 (JP)
(72) Inventor: TSUNEMINE, Takanobu, Yokohama-shi, Kanagawa 221-0022 (JP); YAMAMOTO, Mutsumi, Yokohama-shi, Kanagawa 221-0022 (JP); WATANUKI, Katsumi, Yokohama-shi, Kanagawa 221-0022 (JP); KANEKO, Katsuyuki, Yokohama-shi, Kanagawa 221-0022 (JP)
(74) Representative: Wimmer, Hubert
(86) International application number: PCT/JP2023/024589
(87) International publication number: WO 2024/048060

(57) **Abstract**

A providing apparatus includes: a real space information acquisition unit configured to acquire position information on a real object present in a real space in which a user is present; a virtual space information acquisition unit configured to acquire position information on a virtual object in a virtual space; a user behavior determination unit configured to determine whether the user has performed a predetermined behavior with respect to the real object in the real space; and a virtual space providing unit configured to make the position information on the real space and the position information on the virtual space consistent, to generate a transition video that indicates a state between the real space and the virtual space when the user behavior determination unit determines that the user has performed the predetermined behavior with respect to the real object in the real space, and to provide a transition space that includes the transition video before providing the virtual space to the user.

## Description

### Field

The present disclosure relates to a providing apparatus and a providing method.

### Background

A technology for providing a virtual space such as an Augmented Reality (AR) space or a Virtual Reality (VR) space, by using a wearable device such as a Head Mounted Display (HMD), is known. For example, Patent Literature 1 discloses a technology for providing a high-quality virtual reality experience.

### Citation List

### Patent Literature

Patent Literature 1: Japanese Laid-open Patent Publication No. 2019-8513

### Summary

When a virtual space is provided to a user, a video that is viewed by the user changes rapidly. Therefore, when the video that is viewed by the user is transferred from a real space to a virtual space, a feeling of discomfort may occur.

An object of the present disclosure is to provide a providing apparatus and a providing method capable of reducing a feeling of discomfort when a virtual space is provided.

According to one aspect of the present disclosure, there is provided a providing apparatus comprising: a real space information acquisition unit configured to acquire position information on a real object present in a real space in which a user is present; a virtual space information acquisition unit configured to acquire position information on a virtual object present in a virtual space; a user behavior determination unit configured to determine whether the user has performed a predetermined behavior with respect to the real object in the real space; and a virtual space providing unit configured to make the position information in the real space and the position information in the virtual space consistent, to generate a transition video that indicates a state between the real space and the virtual space when the user behavior determination unit determines that the user has performed the predetermined behavior with respect to the real object in the real space, and to provide a transition space that includes the transition video before providing the virtual space to the user.

According to one aspect of the present disclosure, there is provided a providing method comprising: a step of acquiring position information on a real object present in a real space in which a user is present; a step of acquiring position information on a virtual object present in a virtual space; a step of determining whether the user has performed a predetermined behavior with respect to the real object in the real space; and a step of making the position information in the real space and the position information in the virtual space consistent, generating a transition video that indicates a state between the real space and the virtual space when it is determined that the user has performed the predetermined behavior with respect to the real object in the real space, and providing a transition space that includes the transition video before providing the virtual space to the user.

According to the present disclosure, it is possible to reduce a feeling of discomfort when a virtual space is provided.

### Brief Description of Drawings

FIG. 1 is a diagram for explaining an overview of a real space and a virtual space according to one embodiment;
FIG. 2 is a diagram illustrating a configuration example of a providing system according to one embodiment;
FIG. 3 is a block diagram illustrating a configuration example of the providing apparatus according to one embodiment;
FIG. 4 is a flowchart illustrating a flow of a virtual space providing process performed by the providing apparatus according to one embodiment;
FIG. 5 is a flowchart illustrating a flow of a process of terminating provision of a virtual space by the providing apparatus according to one embodiment;
FIG. 6 is a block diagram illustrating a configuration example of a providing apparatus according to a modification of one embodiment; and
FIG. 7 is a flowchart illustrating a flow of a virtual space providing process performed by the providing apparatus according to the modification of one embodiment.

### Description of Embodiments

Embodiments according to the present disclosure will be described below with reference to the accompanying drawings. Meanwhile, the present disclosure is not limited by the embodiments below. Further, in the embodiments below, the same components are denoted by the same reference symbols, and repeated explanation will be omitted.

### Embodiment

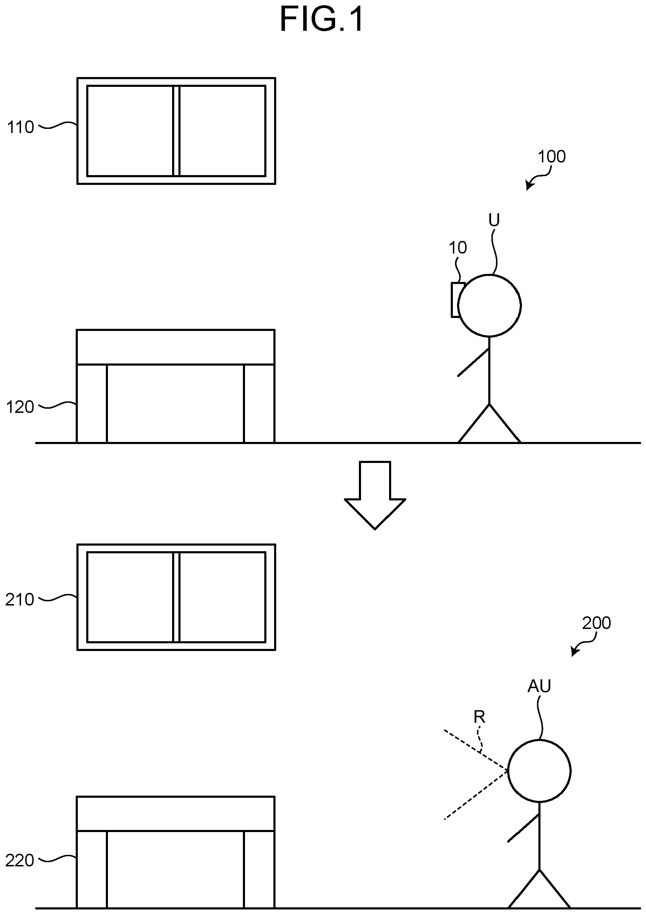

An overview of a real space and a virtual space according to one embodiment will be described with reference to FIG. 1. FIG. 1 is a diagram for explaining an overview of the real space and the virtual space according to one embodiment.

In the present embodiment, a providing apparatus 10 provides a virtual space to a user U. The providing apparatus 10 provides the virtual space to the user U by displaying an image. The providing apparatus 10 is, for example, a head mounted display that is worn on a head portion of the user U.

In the example illustrated in FIG. 1, a real space in which the user U actually exists is referred to as a real space 100, and a virtual space that is provided by the providing apparatus 10 is referred to as a virtual space 200. The providing apparatus 10 displays an image for the virtual space 200 in accordance with a behavior including a line of sight and a body motion of the user U in the real space 100. The providing apparatus 10 simulates that the user U behaves as a user avatar AU in the virtual space 200, and displays the image for the virtual space 200. In the present embodiment, when the user U performs a predetermined behavior on a real object such as a window 110 or a desk 120 in the real space 100, the providing apparatus 10 displays a transition video between the real space 100 and the virtual space 200, and thereafter displays the image for the virtual space 200. Therefore, the user U is able to recognize that the user U is present in the virtual space 200. In the present embodiment, the virtual space 200 may be an AR space, a VR space, or a Mixed Reality (MR) space.

### Providing system

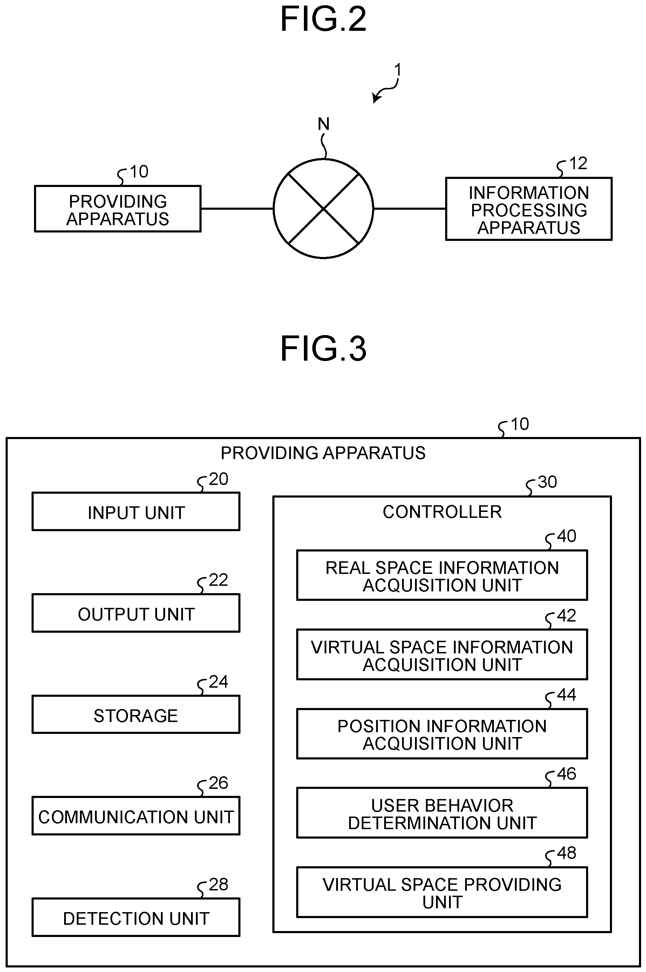

A configuration example of a providing system according to one embodiment will be described with reference to FIG. 2. FIG. 2 is a diagram illustrating a configuration example of the providing system according to one embodiment.

As illustrated in FIG. 2, a providing system 1 includes the providing apparatus 10 and an information processing apparatus 12. The providing apparatus 10 and the information processing apparatus 12 are communicably connected to each other via a wired or wireless network N. The network N is, for example, an Internet network, but not limited thereto.

In the present embodiment, the providing system 1 provides the virtual space 200 to the user U. In the example illustrated in FIG. 1, the user U is wearing the providing apparatus 10, and the providing apparatus 10 provides, to the user U, an image of the virtual space 200 in a visual field range R of the user avatar AU in the virtual space 200, as the image for the virtual space 200. Meanwhile, the information processing apparatus 12 may provide the virtual space 200 to multiple users who are different from the user U. In other words, the virtual space 200 may be a space that can be shared by multiple users. The number of users who share the virtual space can be arbitrary.

The information processing apparatus 12 is an apparatus that performs information processing on information for the virtual space 200. The information processing apparatus 12 may be a server that transmits and receives information to and from the providing apparatus 10, and performs image processing on the image for the virtual space 200. For example, the information processing apparatus 12 includes an arithmetic device such as a Central Processing Unit (CPU) or a Micro Processing Unit (MPU), and a storage device such as a Random Access Memory (RAM) or a Read Only Memory (ROM). The information processing apparatus 12 is a computer and performs processing by reading a program (software) from the storage device and executing the program.

### Providing apparatus

A configuration example of the providing apparatus according to one embodiment will be described with reference to FIG. 3. FIG. 3 is a block diagram illustrating a configuration example of the providing apparatus according to one embodiment.

As illustrated in FIG. 3, the providing apparatus 10 includes an input unit 20, an output unit 22, a storage 24, a communication unit 26, a detection unit 28, and a controller 30.

The input unit 20 receives various kinds of input operation on the providing apparatus 10. The input unit 20 outputs an operation signal corresponding to the received input operation to the controller 30. The input unit 20 includes, for example, a button, a switch, a microphone, or the like.

The output unit 22 outputs various kinds of information. The output unit 22 includes, for example, a display that displays various kinds of videos. The display is, for example, a display including a liquid crystal display, an organic Electro-Luminescence (EL), or the like. The output unit 22 includes, for example, a speaker, an earphone jack, or the like that outputs various kinds of sound.

The storage 24 stores therein various kinds of information. The storage 24 stores therein information such as a calculation content of the controller 30 and a program. The storage 24 includes, for example, at least one of a main storage device such as a RAM or a ROM, and an external storage device such as a Hard Disk Drive (HDD).

The communication unit 26 is a communication module that performs communication between the providing apparatus 10 and an external apparatus. For example, the communication unit 26 performs communication between the providing apparatus 10 and the information processing apparatus 12.

The detection unit 28 is a sensor that detects various kinds of states of the user U in the real space 100 and surroundings of the providing apparatus 10. The detection unit 28 is a sensor that detects a position of the user U in the real space 100, a posture of the user U, and surroundings of the providing apparatus 10.

The detection unit 28 includes, for example, a position sensor, an acceleration sensor, a gyro sensor, a stereo camera, a Time of Flight (ToF) sensor, or the like. The position sensor detects a position of the user U in the real space. The acceleration sensor detects a motion of the user U in the real space 100. The gyro sensor detects a posture of the user U in the real space 100. The stereo camera and the ToF sensor detect surroundings of the providing apparatus 10 in the real space. The detection unit 28 is mounted on a head, a hand, a waist, a leg, or the like of the user U, for example.

The detection unit 28 is not limited to those as described above as long as it is possible to detect the position of the user U and the posture of the user U in the real space 100 and an object that is present around the providing apparatus 10 in the real space 100. For example, the detection unit 28 may detect, by Light Detection And Ranging (LiDAR), an object that is present in the real space 100. For example, the detection unit 28 may detect the position and the posture of the user U by using an image of the real space 100 that is captured by a camera. The detection unit 28 may use, as the position sensor, a beacon, or the like.

The controller 30 controls each of units of the providing apparatus 10. The controller 30 includes, for example, an information processing device such as a CPU or an MPU, and a storage device such as a RAM or a ROM. The controller 30 executes a program that controls operation of the providing apparatus 10 according to the present disclosure. The controller 30 may be implemented by, for example, an integrated circuit such as an Application Specific Integrated Circuit (ASIC) or a Field Programmable Gate Array (FPGA). The controller 30 may be implemented by a combination of hardware and software.

The controller 30 includes a real space information acquisition unit 40, a virtual space information acquisition unit 42, a position information acquisition unit 44, a user behavior determination unit 46, and a virtual space providing unit 48.

The real space information acquisition unit 40 acquires information on a real object that is present in the real space 100. The real object indicates an object that is present in the real space 100. In the example illustrated in FIG. 1, the window 110 and the desk 120 are examples of the real object. The information on the real object includes relative position information that indicates a relative position relationship between the user U and the real object in the real space 100, and absolute position information that indicates an absolute position on the real object. The information on the real object includes information on a shape of the real object and information on a type of the real object.

The real space information acquisition unit 40 controls the detection unit 28 and causes the detection unit 28 to detect an object around the providing apparatus 10. The real space information acquisition unit 40 extracts multiple feature points and regions from the detected object by using a well-known technology based on a detection result that is obtained by the detection unit 28. The real space information acquisition unit 40 acquires information on the real object based on the extracted feature points and the extracted regions. A method of acquiring the information on the real object by the real space information acquisition unit 40 is not limited to this example. For example, it may be possible to set, in advance, information on a position or a shape of a furniture in a room of the user U as the information on the real object, and the real space information acquisition unit 40 may acquire the set information on the real object.

A type of the object to be acquired by the real space information acquisition unit 40 may be arbitrary. In the present embodiment, the real space information acquisition unit 40 acquires, as the information on the real object, position information and shape information on an object (for example, the window 110, the desk 120, or the like) that remains still in the real space.

The virtual space information acquisition unit 42 acquires information on a virtual object that is present in the virtual space 200. The virtual object indicates an object that is present in the virtual space 200. In the example illustrated in FIG. 1, a virtual window 210 and a virtual desk 220 are examples of the virtual object. The information on the virtual object includes relative position information that indicates a relative position relationship between the user avatar AU and the virtual object in the virtual space 200, and absolute position information that indicates an absolute position on the virtual object. The information on the virtual object includes information on a shape of the virtual object and information on a type of the virtual object.

The position information acquisition unit 44 acquires user position information. The user position information is information indicating a position of the user avatar AU in the virtual space 200, which is set based on the information on the real object that is acquired by the real space information acquisition unit 40 and the information on the virtual object that is acquired by the virtual space information acquisition unit 42.

In the present embodiment, the position information acquisition unit 44 sets the user position information based on a position relationship between the virtual object and the user avatar AU in the virtual space 200, which is calculated based on the position relationship between the real object and the user U. Specifically, the position information acquisition unit 44 sets the user position information such that a position of the virtual object with respect to the user avatar AU in the virtual space 200 corresponds to a position of the real object with respect to the user U in the real space 100. In other words, the position of the user avatar AU in the virtual space 200, which is indicated by the user position information, is set such that an orientation and a distance from the virtual object to the user avatar AU correspond to an orientation and a distance from the real object to the user U in the real space 100.

The user behavior determination unit 46 determines whether or not the user U has performed a predetermined behavior with respect to the real object in the real space 100. For example, the user behavior determination unit 46 determines an attention level of the user U to the real object. The attention level to the real object is calculated based on a duration in which the real object is looked at or the number of repetitions of looking at the real object at predetermined intervals. The user behavior determination unit 46 calculates a higher attention level as the duration in which the real object is looked at or the number of repetitions of looking at the real object at predetermined intervals increase. The user behavior determination unit 46 determines whether or not the attention level of the user U to the real object exceeds a predetermined threshold. For example, the user behavior determination unit 46 determines whether or not the user U has held his/her hand over the real object. For example, the user behavior determination unit 46 determines whether or not the user U has held his/her hand over the real object in a state in which the user U has approached the real object within a predetermined distance. The predetermined behavior in the real space 100 is not limited to the above examples, and may include a different behavior. The predetermined behavior in the real space 100 may be arbitrarily set in advance by the user U.

The user behavior determination unit 46 determines whether or not the user avatar AU has performed a predetermined behavior with respect to the virtual object in the virtual space 200. For example, the user behavior determination unit 46 determines an attention level of the user avatar AU to the virtual object. The attention level to the virtual object is calculated based on a duration in which the virtual object is looked at or the number of repetitions of looking at the virtual object at predetermined intervals. The user behavior determination unit 46 calculates a higher attention level as the duration in which the virtual object is looked at or the number of repetitions of looking at the virtual object at predetermined intervals increase. The user behavior determination unit 46 determines whether or not the attention level of the user avatar AU to the virtual object exceeds a predetermined threshold. For example, the user behavior determination unit 46 determines whether or not the user avatar AU has held his/her hand over the virtual object. For example, the user behavior determination unit 46 determines whether or not the user avatar AU has held his/her hand over the virtual object in a state in which the user avatar AU has approached the virtual object within a predetermined distance. The predetermined behavior in the virtual space 200 is not limited to the above examples, and may include a different behavior. The predetermined behavior in the virtual space 200 may be arbitrarily set in advance by the user U.

The virtual space providing unit 48 provides the virtual space 200 to the user U based on the user position information. The virtual space providing unit 48 sets a position indicated by the user position information to the position of the user avatar AU in the virtual space 200, and provides the virtual space 200 to the user U. Specifically, the virtual space providing unit 48 acquires information on the position and the orientation of the user U in the real space 100, and converts the position and the orientation of the user U in the real space 100 to a position and an orientation of a viewpoint of the user avatar AU indicated by the user position information in the coordinate system of the virtual space 200. The virtual space providing unit 48 causes the output unit 22 to output, as the image for the virtual space 200, an image of the virtual space 200 in the case where the virtual space 200 is viewed from the calculated position and the calculated posture of the viewpoint of the user U.

The virtual space providing unit 48 provides the virtual space 200 to the user U based on a determination result of the behavior of the user U obtained by the user behavior determination unit 46. When it is determined that the user U has performed the predetermined behavior, the virtual space providing unit 48 provides the virtual space 200 to the user U. For example, when the user behavior determination unit 46 determines that the attention level of the user U to the desk 120 exceeds a predetermined threshold, the virtual space providing unit 48 provides the virtual space 200 to the user U. For example, when the user behavior determination unit 46 determines that the attention level of the user U to the desk 120 exceeds the predetermined threshold and the user U has held his/her hand over the desk 120, the virtual space providing unit 48 provides the virtual space 200 to the user U.

In the present embodiment, the position and the posture of the user U in the real space 100 are reflected in the position and the posture of the viewpoint of the user avatar AU in the virtual space 200. Therefore, when the user U moves in the real space 100, the position and the posture of the viewpoint of the user avatar AU in the virtual space 200 also move. In this case, it is preferable to associate a movement amount of the user U in the real space 100 with a movement amount of the viewpoint of the user avatar AU in the virtual space 200.

The virtual space providing unit 48 may display an image that represents the real object in the virtual space 200 such that the image is superimposed on the virtual object. The virtual space providing unit 48 may display the image that represents the real object in the virtual space 200 such that the image is superimposed on the virtual object, based on shape information on the virtual object and shape information on the real object. For example, when a size of the virtual object is larger than a size of the real object, the virtual space providing unit 48 may display the image that represents the real object in the virtual space 200 such that the image is superimposed on the virtual object. In this case, the output unit 22 may provide an AR space that displays an image of the virtual space 200 while making the real space 100 transparent or may display the image of the virtual space 200 and the image that represents the real object in a superimposed manner. Furthermore, it may be possible to delete a portion that does not overlap with the real object in the virtual object from the image of the virtual space 200 or provide information as a region that is not associated with the real object.

In the present embodiment, the virtual space providing unit 48 provides a transition space that includes a transition video that indicates a state between the real space 100 and the virtual space 200 to the user U, before providing the virtual space 200. The virtual space providing unit 48 provides the transition space that includes a transition video that indicates a state between the real object in the real space 100 and the virtual object in the virtual space 200 to the user U, before providing the virtual space 200. The transition video is, for example, a video that includes 50% of a video of the real space 100 and 50% of a video of the virtual space 200, but embodiments are not limited to this example. For example, the virtual space providing unit 48 causes the output unit 22 to display, as the transition video, a three-dimensional (3D) desk that has the same size and the same shape as those of the desk 120 while superimposing the 3D desk on the desk 120 by AR. In this case, when the user U opens a drawer of the 3D desk, the virtual space providing unit 48 gradually increases a display region of the virtual space 200 and creates an experience of being drawn into the virtual space 200. At this time, the virtual space providing unit 48 causes the output unit 22 to output not only the video of the virtual space 200, but also sound of the virtual space 200 such that the sound is superimposed on sound of the real space 100. When the user U is transferred to the virtual space 200, the virtual space providing unit 48 causes the output unit 22 to output only the video of the virtual space 200 and the sound of the virtual space 200.

The virtual space providing unit 48 may cause the output unit 22 to display the transition video that corresponds to a type of the real object. For example, when the real object is a manhole, the virtual space providing unit 48 may cause the output unit 22 to display a transition video that creates an experience in which the manhole extends like a flexible tube and a body size of the user U is reduced to allow the user U to enter the tube. For example, when the real object is a window of a building, the virtual space providing unit 48 may cause the output unit 22 to display a transition video that creates an experience in which a ladder or an escalator appears to climb toward the window.

The virtual space providing unit 48 terminates provision of the virtual space 200 and returns the user U to the real space 100 based on a determination result on a behavior of the user avatar AU obtained by the user behavior determination unit 46. When it is determined that the user avatar AU has performed a predetermined behavior, the virtual space providing unit 48 returns the user U to the real space 100. The virtual space providing unit 48 provides the transition video between the virtual space 200 and the real space 100 to the user U, before returning from the virtual space 200 to the real space 100. For example, when the user behavior determination unit 46 determines that an attention level of the user avatar AU to the virtual desk 220 exceeds a predetermined threshold, the virtual space providing unit 48 returns the user U to the real space 100. For example, when the user behavior determination unit 46 determines that the attention level of the user avatar AU to the virtual desk 220 exceeds the predetermined threshold and the user avatar AU has held his/her hand over the virtual desk 220, the virtual space providing unit 48 returns the user U to the real space 100.

The virtual space providing unit 48 may display an exit to return to the real space 100 in the virtual space 200. In this case, for example, when the user behavior determination unit 46 determines that an attention level of the user avatar AU to the exit exceeds a predetermined threshold, the virtual space providing unit 48 returns the user U to the real space 100. For example, when the user behavior determination unit 46 determines that the attention level of the user avatar AU to the exit exceeds the predetermined threshold and the user avatar AU has held his/her hand over the exit, the virtual space providing unit 48 returns the user U to the real space 100.

The virtual space providing unit 48 provides the transition video between the virtual space 200 and the real space 100 to the user U before returning from the virtual space 200 to the real space 100. For example, the virtual space providing unit 48 gradually increases a display region of the exit to the real space 100 and creates an experience of being drawn into the real space 100. At this time, the virtual space providing unit 48 causes the output unit 22 to output not only the video of the real space 100, but also the sound of the real space 100 such that the sound is superimposed on the sound of the virtual space 200.

### Process of providing apparatus

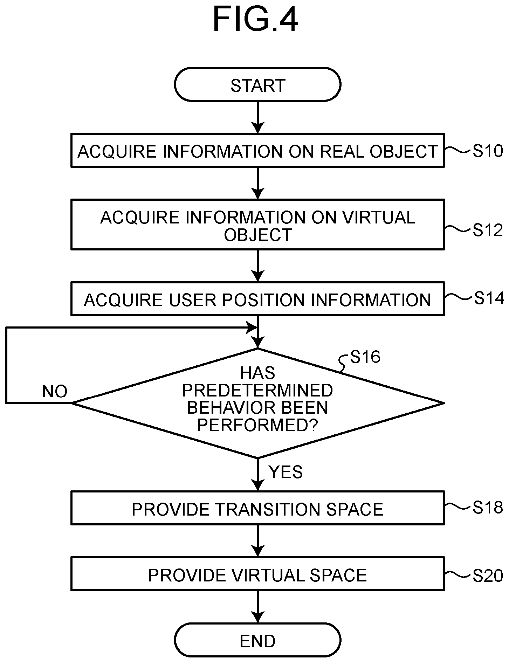

Details of a process performed by the providing apparatus according to one embodiment will be described below with reference to FIG. 4. FIG. 4 is a flowchart illustrating a flow of a virtual space providing process performed by the providing apparatus according to one embodiment.

The process illustrated in FIG. 4 is a process performed by the providing apparatus 10 to provide the virtual space 200 to the user. Specifically, FIG. 4 illustrates a process in an example in which the user U wears the providing apparatus 10 in a room and watches fireworks in the virtual space 200.

The real space information acquisition unit 40 acquires information on a real object that is present around the providing apparatus 10 (Step S10). Specifically, the real space information acquisition unit 40 acquires, from the detection unit 28, information on a real object that is present around the providing apparatus 10 and that is detected by the detection unit 28. Then, the process proceeds to Step S12.

The virtual space information acquisition unit 42 acquires information on a virtual object that is present in the virtual space (Step S12). Specifically, the virtual space information acquisition unit 42 acquires the information on the virtual object from the information processing apparatus 12 via the communication unit 26. Then, the process proceeds to Step S14.

The position information acquisition unit 44 acquires user position information that indicates a position of the user in the virtual space (Step S14). Then, the process proceeds to Step S16.

The user behavior determination unit 46 determines whether or not the user U has performed a predetermined behavior in the real space 100 (Step S16). For example, the user behavior determination unit 46 determines that the user has performed the predetermined behavior in the real space when the user has touched a door of a room to enter the room. When it is determined that the user has performed the predetermined behavior in the real space (Step S16; Yes), the process proceeds to Step S18. When it is not determined that the user has performed the predetermined behavior in the real space (Step S16; No), the process at Step S16 is repeated.

When it is determined as Yes at Step S16, the virtual space providing unit 48 provides the transition space to the user U (Step S18). For example, when the user behavior determination unit 46 determines that the user U has touched the door of the room, the virtual space providing unit 48 causes the output unit 22 to output sound of fireworks as if the sound is heard from behind the door. Further, when the user behavior determination unit 46 determines that the user U has entered the room and looked at the window 110, the virtual space providing unit 48 causes the output unit 22 to faintly display a video of the fireworks on the window 110 in a superimposed manner.
Then, the process proceeds to Step S20.

The virtual space providing unit 48 provides a virtual space to the user U (Step S20). Specifically, the virtual space providing unit 48 provides a virtual space, in which the position information on the user U in the real space 100 and the position information on the user avatar AU in the virtual space 200 are made consistent, to the user U. For example, the virtual space providing unit 48 causes the output unit 22 to output a video in which a ladder extends from the virtual window 210 that is located at a higher position in the virtual space 200. For example, when the user behavior determination unit 46 determines that the user avatar AU has held his/her hand on the ladder, the virtual space providing unit 48 causes the output unit 22 to output a video in which the user avatar AU climbs up the ladder. At this time, the virtual space providing unit 48 causes the output unit 22 to output louder sound of the fireworks that is heard from outside of the virtual window 210 along with climbing up the ladder. For example, when the user behavior determination unit 46 determines that the user avatar AU has opened the virtual window 210, the virtual space providing unit 48 causes the output unit 22 to output a video in which the fireworks is shot in a clear night view outside the virtual window 210. At this time, the virtual space providing unit 48 causes the output unit 22 to output clear sound of the fireworks. Further, for example, when the user behavior determination unit 46 determines that the user avatar AU is looking around while looking away from the virtual window 210, the virtual space providing unit 48 causes the output unit 22 to output a video in which the room is looked down from a higher position. Then, the process in FIG. 4 is provided.

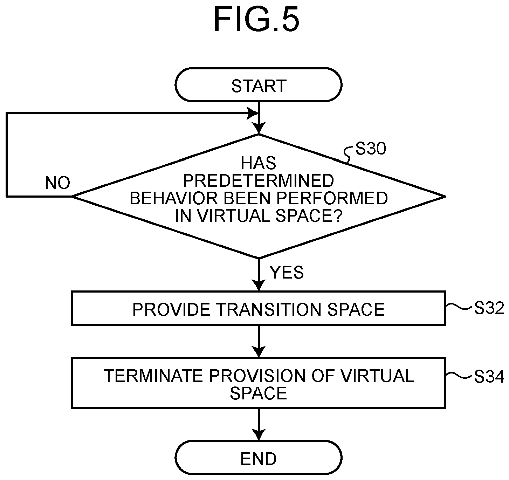

Details of a process performed by the providing apparatus according to one embodiment will be described below with reference to FIG. 5. FIG. 5 is a flowchart illustrating a flow of a process of terminating provision of the virtual space by the providing apparatus according to one embodiment.

The user behavior determination unit 46 determines whether or not the user avatar AU has performed a predetermined behavior in the virtual space 200 (Step S30). For example, when the user avatar AU closes the virtual window 210 and looks at the ladder, the user behavior determination unit 46 determines that the user avatar AU has performed the predetermined behavior in the virtual space 200. When it is determined that the user avatar AU has performed the predetermined behavior in the virtual space 200 (Step S30; Yes), the process proceeds to Step S32. When it is not determined that the user avatar AU has performed the predetermined behavior in the virtual space 200 (Step S30; No), the process at Step S30 is repeated.

When it is determined as Yes at Step S30, the virtual space providing unit 48 provides the transition space to the user U (Step S32). For example, when the user behavior determination unit 46 determines that the user U has held his/her hand on the ladder, the virtual space providing unit 48 causes the output unit 22 to output a video in which the user U climbs down the ladder. Further, when the user behavior determination unit 46 determines that the user U has looked at the virtual window 210, the virtual space providing unit 48 causes the output unit 22 to faintly display a video of the fireworks on the virtual window 210 with sound that is heard from the virtual window 210. Then, the process proceeds to Step S34.

The virtual space providing unit 48 terminates provision of the virtual space 200 to the user (Step S34). Specifically, the virtual space providing unit 48 terminates output of the video of the fireworks and output of the sound of the fireworks, and causes the output unit 22 to stop display of the virtual space 200. Then, the process in FIG. 5 is terminated.

As described above, in one embodiment, the transition space that indicates a state between the real space and the virtual space is provided to the user before provision of the virtual space. With this configuration, in one embodiment, it is possible to reduce a feeling of discomfort due to a rapid change of a video at the time of switching from the real space to the virtual space when the virtual space is provided. Furthermore, in one embodiment, it is possible to reduce a feeling of auditory discomfort due to a rapid change of sound at the time of switching from the real space to the virtual space when the virtual space is provided.

### Modification of one embodiment

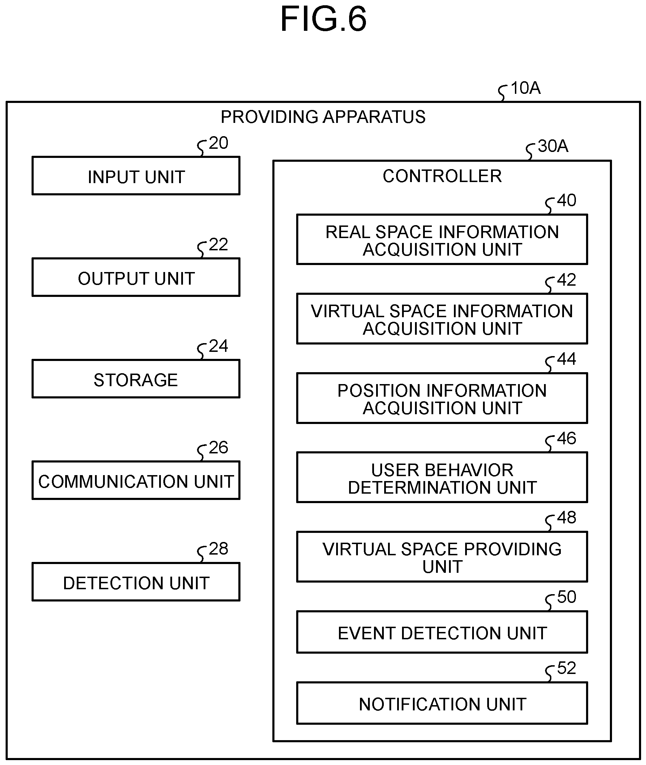

A configuration example of a providing apparatus according to a modification of one embodiment will be described below with reference to FIG. 6. FIG. 6 is a block diagram illustrating a configuration example of the providing apparatus according to the modification of one embodiment.

As illustrated in FIG. 6, a providing apparatus 10A is different from the providing apparatus 10 illustrated in FIG. 3 in that a controller 30A includes an event detection unit 50 and a notification unit 52.

The event detection unit 50 detects an event that occurs for the user U in the real space 100. The event detection unit 50 detects an event that occurs for the user U in the real space 100 while the virtual space providing unit 48 is providing the virtual space 200 to the user U. For example, the event detection unit 50 detects, as the event, a possibility that the user U and a real object come into contact with each other in the real space 100.

The event detection unit 50 detects the event based on, for example, a distance between the user U and a real object that is detected by the detection unit 28. For example, when the distance between the user U and the real object is equal to or smaller than a threshold, the event detection unit 50 detects that the event has occurred for the user U. The event detection unit 50 may change the threshold for the distance in accordance with a type of the real object, for example. For example, the event detection unit 50 may increase the threshold for the distance when the real object is a moving body that is approaching the user U as compared to a case where the real object is a stationary body. For example, when the real object is a moving body, the event detection unit 50 may change the threshold for the distance based on speed information on the real object that is detected by the detection unit 28. For example, the event detection unit 50 may increase the threshold for the distance as a moving speed of the real object increases.

When the event is detected, the event detection unit 50 may determine a danger level of the detected event. The danger level indicates an emergency level for giving a notice of the event. For example, the event detection unit 50 determines a higher danger level as the possibility that the user U may get injured when the user U and the detected real object come into contact with each other increases. For example, the event detection unit 50 determines a higher danger level as the possibility that the user U may get seriously injured when the user U and the detected real object come into contact with each other increases. The event detection unit 50 may determine the danger level in a stepwise manner, such as "high", "medium", and "low", for example. The event detection unit 50 may determine the danger level by numerical values, such as "1", "2", and "3", for example.

The event detection unit 50 may determine the danger level in accordance with, for example, a type of the detected real object. For example, the event detection unit 50 may determine a low danger level when the real object is a furniture such as a chair, and determine a high danger level when the real object is a traveling vehicle or the like.

The event detection unit 50 may determine the danger level in accordance with, for example, a size of the detected real object. For example, the event detection unit 50 may determine a lower danger level as the size of the real object decreases, and determine a higher danger level as the size of the real object increases.

The event detection unit 50 may determine the danger level in accordance with, for example, a moving speed of the detected real object. For example, the event detection unit 50 may determine a lower danger level as the moving speed of the real object decreases, and determine a higher danger level as the moving speed of the real object increases.

When the event detection unit 50 detects an event, the notification unit 52 notifies the user U that the event is detected. For example, when the event detection unit 50 detects an event, the notification unit 52 causes the output unit 22 to output notification sound, a notification video, or the like to notify the user U that the event is detected.

The notification unit 52 may change a way of notification in accordance with the danger level of the event that is detected by the event detection unit 50. For example, the notification unit 52 may increase a notification intensity as the danger level increases. For example, the notification unit 52 may cause the output unit 22 to output louder notification sound as the danger level increases. For example, the notification unit 52 may cause the output unit 22 to output a notification video in a more eye-catching manner as the danger level increases.

### Process of providing apparatus

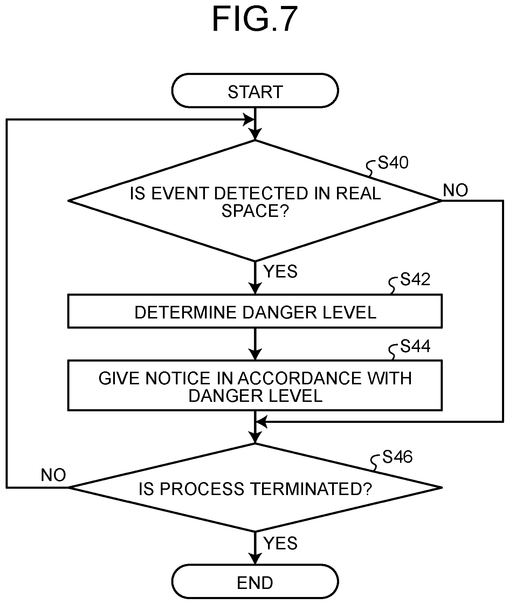

Details of a process performed by the providing apparatus according to the modification of one embodiment will be described below with reference to FIG. 7. FIG. 7 is a flowchart illustrating a flow of a virtual space providing process performed by the providing apparatus according to the modification of one embodiment.

The process illustrated in FIG. 7 is a process performed by the providing apparatus 10A to provide the virtual space 200 to the user U.

The event detection unit 50 determines whether or not an event for the user U is detected in the real space 100 (Step S40). Specifically, when a distance between the user U and the real object detected by the detection unit 28 is equal to or smaller than a predetermined threshold, the event detection unit 50 detects an event for the user U. When the event for the user U is detected (Step S40; Yes), the process proceeds to Step S42. When the event for the user U is not detected (Step S40; No), the process proceeds to Step S46.

When it is determined as Yes at Step S40, the event detection unit 50 determines a danger level of the detected event (Step S42). Specifically, the event detection unit 50 determines the danger level based on a type or a moving speed of the detected real object. Then, the process proceeds to Step S44.

The notification unit 52 gives a notice in accordance with the danger level (Step S44). Specifically, the notification unit 52 causes the output unit 22 to output notification sound or a notification video in accordance with the danger level. Then, the process proceeds to Step S46.

The controller 30A determines whether or not the process is terminated (Step S46). Specifically, when the virtual space providing unit 48 terminates provision of the virtual space 200 to the user U, the controller 30A determines that the process is terminated. When it is determined that the process is terminated (Step S46; Yes), the process in FIG. 7 is terminated. When it is not determined that the process is terminated (Step S46; No), the process proceeds to Step S40.

In the modification of one embodiment, the possibility of contact with a real object in the real space is detected as an event when the virtual space is provided to the user, and a notice of detection of the event is given to the user when the event is detected. With this configuration, according to the modification of one embodiment, it is possible to improve safety of the user who is experiencing the virtual space.

Meanwhile, in one embodiment and the modification of one embodiment, it is explained that the providing apparatus 10 and the providing apparatus 10A are head mounted displays that are mounted on a head portion of the user U, but the present disclosure is not limited to these examples. For example, the providing apparatus 10 and the providing apparatus 10A may be projection apparatuses that project a video on a real object, a screen, a real space, or the like. In this case, the providing apparatus 10 or the providing apparatus 10A may provide the virtual space to the user U by projecting a video in the real space or the like, for example.

The components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions. Meanwhile, the configuration based on distribution and integration may be implemented dynamically.

While embodiments of the present disclosure have been described above, the present disclosure is not limited by the details of the embodiments. Further, the components described above include one that can be easily thought of by a person skilled in the art, one that is practically identical, and one that is within an equivalent range. Furthermore, the components described above may be combined appropriately. Moreover, within the scope not departing from the gist of the embodiments, various omission, replacement, and modifications of the components may be made.

### Industrial Applicability

A providing apparatus and a providing method of the present disclosure may be applied to a head mounted display, for example.

### Reference Signs List

- 1: providing system

- 10, 10A: providing apparatus
- 12: information processing apparatus
- 20: input unit
- 22: output unit
- 24: storage
- 26: communication unit
- 28: detection unit
- 30, 30A: controller
- 40: real space information acquisition unit
- 42: virtual space information acquisition unit
- 44: position information acquisition unit
- 46: user behavior determination unit
- 48: virtual space providing unit
- 50: event detection unit
- 52: notification unit

## Claims

1. A providing apparatus comprising:
a real space information acquisition unit configured to acquire position information on a real object present in a real space in which a user is present;
a virtual space information acquisition unit configured to acquire position information on a virtual object present in a virtual space;
a user behavior determination unit configured to determine whether the user has performed a predetermined behavior with respect to the real object in the real space; and
a virtual space providing unit configured to make the position information in the real space and the position information in the virtual space consistent, to generate a transition video that indicates a state between the real space and the virtual space when the user behavior determination unit determines that the user has performed the predetermined behavior with respect to the real object in the real space, and to provide a transition space that includes the transition video before providing the virtual space to the user.

2. The providing apparatus according to claim 1, wherein the virtual space providing unit is further configured to generate the transition video in accordance with a type of the real object.

3. The providing apparatus according to claim 1 or 2, wherein the predetermined behavior includes at least one of a behavior of looking at the real object and a behavior of holding his/her hand over the real object.

4. The providing apparatus according to claim 1 or 2, wherein
the user behavior determination unit is further configured to determine whether the user has performed a predetermined behavior on the virtual object in the virtual space, and
the virtual space providing unit is further configured to provide the transition video before providing the real space to the user when the user behavior determination unit determines that the user has performed the predetermined behavior on the virtual object in the virtual space.

5. The providing apparatus according to claim 1 or 2, further comprising:
a position information acquisition unit configured to acquire user position information that is information indicating a position of the user in the virtual space, wherein
the position information acquisition unit is further configured to acquire the user position information such that the position information on the virtual object with respect to the user in the virtual space corresponds to the position information on the real object with respect to the user in the real space.

6. The providing apparatus according to claim 1 or 2, wherein
the transition video is a video that includes a part of a video of the real space and a part of a video of the virtual space, and
the virtual space providing unit is further configured to output, as the transition video, a video in which the virtual object that has a same size and a same shape as those of the real object is superimposed on the real object.

7. A providing method comprising:
a step of acquiring position information on a real object present in a real space in which a user is present;
a step of acquiring position information on a virtual object present in a virtual space;
a step of determining whether the user has performed a predetermined behavior with respect to the real object in the real space; and
a step of making the position information in the real space and the position information in the virtual space consistent, generating a transition video that indicates a state between the real space and the virtual space when it is determined that the user has performed the predetermined behavior with respect to the real object in the real space, and providing a transition space that includes the transition video before providing the virtual space to the user.
